Europäisches Patentamt

European Patent Office

Office européen des brevets

(19)

(11) **EP 0 744 313 B1**

(12) **FASCICULE DE BREVET EUROPEEN**

(45) Date de publication et mention
de la délivrance du brevet:
**19.03.2003 Bulletin 2003/12**

(51) Int Cl.⁷: **B60K 7/00**

(21) Numéro de dépôt: **96202199.4**

(22) Date de dépôt: **06.07.1993**

(54) **Moteur-roue électrique**

Elektrisches Antriebsrad

Electric motor-wheel

(84) Etats contractants désignés:
**AT BE CH DE DK ES FR GB GR IE IT LI LU MC NL PT SE**

(30) Priorité: **14.07.1992 US 913021**

(43) Date de publication de la demande:
**27.11.1996 Bulletin 1996/48**

(62) Numéro(s) de document de la (des) demande(s)
initiale(s) en application de l'article 76 CBE:
**93915591.7 / 0 650 644**

(73) Titulaire: **HYDRO-QUEBEC**
**Montréal Québec H2Z 1A4 (CA)**

(72) Inventeur: **Couture, Pierre**
**Boucherville, Quebec J4B 4A4 (CA)**

(74) Mandataire: **Thébault, Jean-Louis**
**Cabinet Thébault**
**111 cours du Médoc**
**33300 Bordeaux (FR)**

(56) Documents cités:
**EP-A- 0 337 032** **EP-A- 0 463 168**
**GB-A- 2 250 142** **US-A- 2 506 146**
**US-A- 3 566 165** **US-A- 4 913 258**
**US-A- 4 918 365** **US-A- 5 087 229**

## Description

La présente invention concerne un moteur-roue électrique, comprenant un arbre sur lequel est fixé un stator et un rotor agencé autour dudit stator de manière à tourner autour de ce dernier.

Un moteur-roue électrique de ce type est notamment décrit dans le document EP-A-0 650 644 au nom du présent demandeur. Ce document cite d'autres références de documents se rapportant également aux moteurs-roues.

Le document EP-A-0 052 344 décrit également un moteur-roue selon l'état de la technique antérieure dans lequel une paroi intérieure du moteur présente une forme de cuvette.

Un des buts de la présente invention est de proposer un moteur-roue permettant une fixation plus avantageuse de l'arbre du moteur-roue sur l'extrémité d'une bielle articulée.

A cet effet, la présente invention concerne un moteur-roue électrique comprenant :

- un arbre creux comportant un axe longitudinal, une première et une seconde extrémités, ladite première extrémité étant munie d'une ouverture pouvant recevoir des conducteurs de l'extérieur du moteur-roue, une seconde ouverture étant prévue entre les deux extrémités ou à la seconde extrémité ;
- un stator coaxial avec ledit arbre et fixé audit arbre, ledit stator comprenant une partie centrale fixée audit arbre, un support s'étendant de façon radiale à partir de ladite partie centrale, et une pièce polaire périphérique et circulaire, ladite pièce polaire étant fixée à des extrémités périphériques dudit support ;
- un rotor agencé coaxialement audit stator de manière à pouvoir tourner autour dudit stator, ledit rotor comprenant un boîtier ayant une paroi cylindrique, une paroi interne disposée sur un coté de ladite paroi cylindrique et une paroi externe disposée sur l'autre coté de ladite paroi cylindrique, ladite paroi cylindrique présentant une surface interne munie d'un moyen magnétique entourant ledit stator et séparé dudit stator par un entrefer, ledit arbre se prolongeant à travers une partie centrale de ladite paroi interne,

caractérisé en ce que ladite paroi interne présente un renflement annulaire vers l'intérieur de la largeur de la paroi cylindrique pour délimiter un espace circulaire et concentrique par rapport à ladite première extrémité dudit arbre, et en ce que ledit arbre creux a une longueur plus petite que la largeur de ladite paroi cylindrique de façon à ce qu'un joint d'articulation à rotule associé à une bielle apte à être connectée audit arbre soit positionné au moins en partie dans ledit espace circulaire concentrique.

Avantageusement, ledit espace a des dimensions prédéterminées de manière à permettre à au moins une partie d'un moyen de freinage d'être montée à l'intérieur dudit espace.

La présente invention sera expliquée plus en détails ci-dessous au moyens de quelques modes de réalisation préférés, description donnée à titre d'exemple uniquement, au regard des dessins annexés sur lesquels :

La figure 1 est une vue de côté partiellement en coupe d'un mode de réalisation du présent moteur-roue électrique, en combinaison avec une jante, un pneu et une bielle articulée ;

La figure 2 est une vue de face, partiellement en coupe du rotor et du stator du moteur-roue électrique montrés à la figure 1, incluant des détails de réalisation de la partie centrale ;

La Figure 3 est une vue agrandie d'une partie de la Figure 1;

La Figure 4 est une vue en coupe selon la ligne 4-4 de la Figure 3;

La Figure 5 est une vue de face d'une partie du moteur-roue électrique montré à la Figure 1;

La Figure 6 est une vue agrandie d'une partie de la Figure 1;

La Figure 7 est une vue en coupe le long de la ligne 7-7 de la Figure 5;

La Figure 8 est une vue de face de la jante avec le pneu montrés à la figure 1;

La Figure 9 est une vue en coupe le long de la ligne 9-9 de la Figure 8;

La Figure 10 est une vue agrandie d'une partie de la Figure 9;

La Figure ll est une vue agrandie d'une partie de la Figure 9;

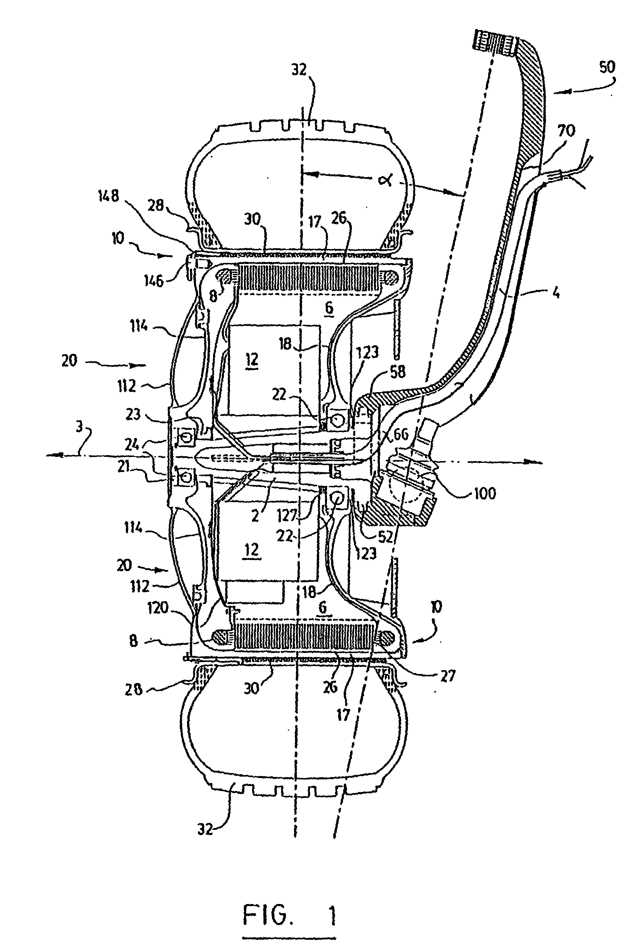

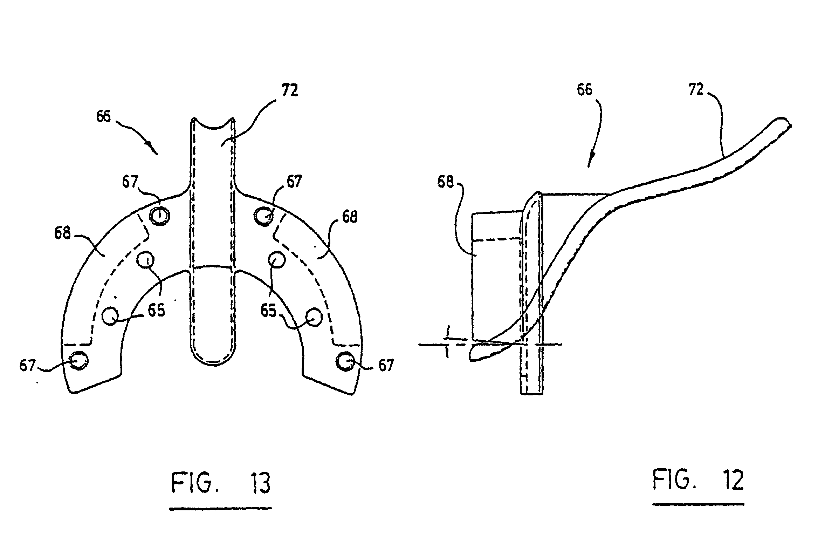

La Figure 12 est une vue agrandie d'une partie de la Figure 1;

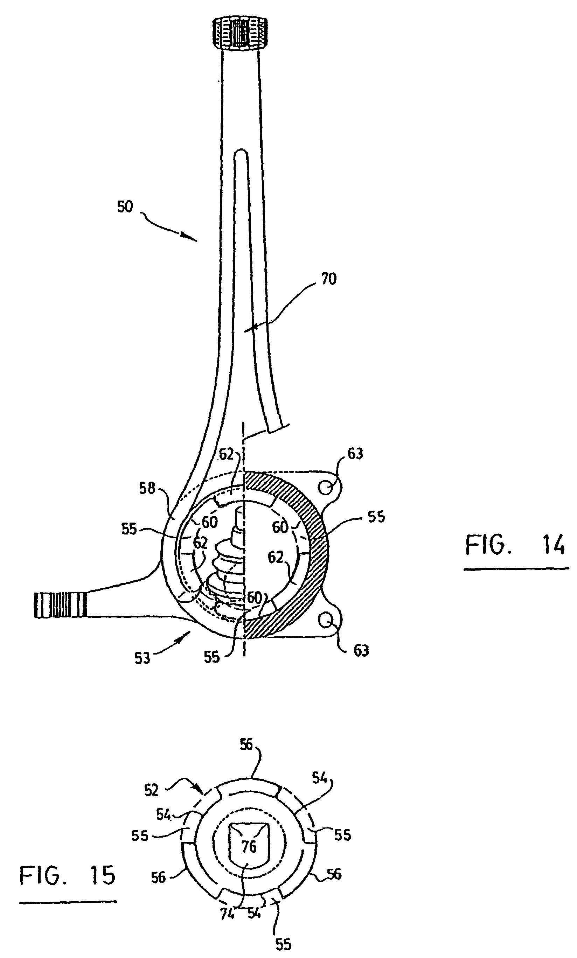

La Figure 13 est une vue de derrière des éléments qui sont montrés à la Figure 12;

La Figure 14 est une vue de derrière de la bielle articulée montrée à la Figure 1, partiellement en coupe;

La Figure 15 est une vue de derrière d'un élément de la Figure 1 sur lequel la bielle articulée est reliée;

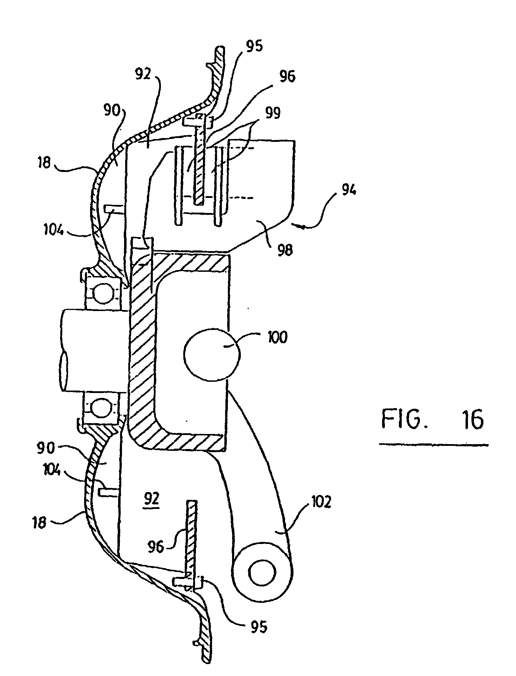

La Figure 16 est une vue de dessus partiellement en coupe de la partie arrière du moteur-roue électrique montré à la Figure 1;

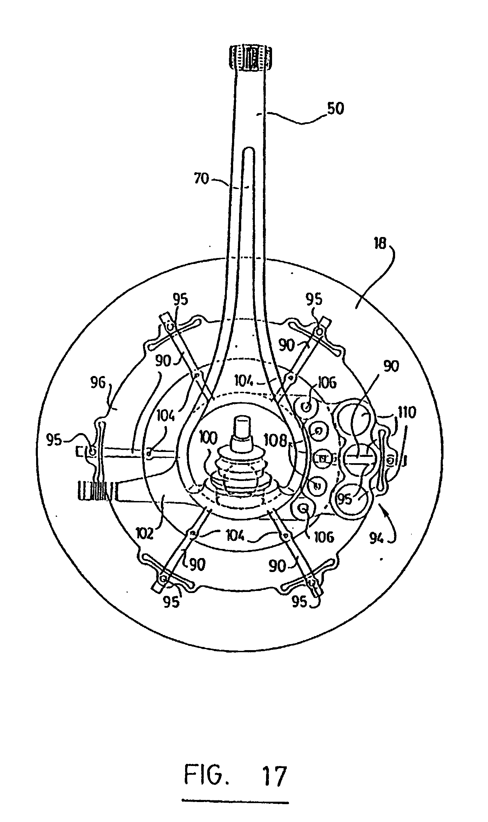

La Figure 17 est une vue de derrière de la bielle articulée en combinaison avec un frein à disque;

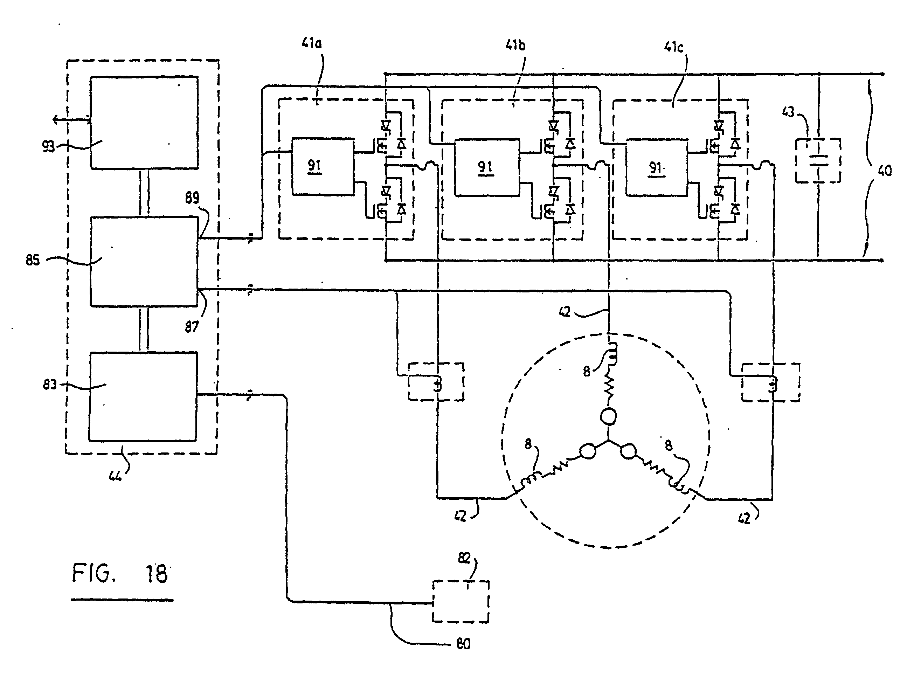

La Figure 18 est un diagramme bloc schématique d'un système de conversion électrique selon la présente invention;

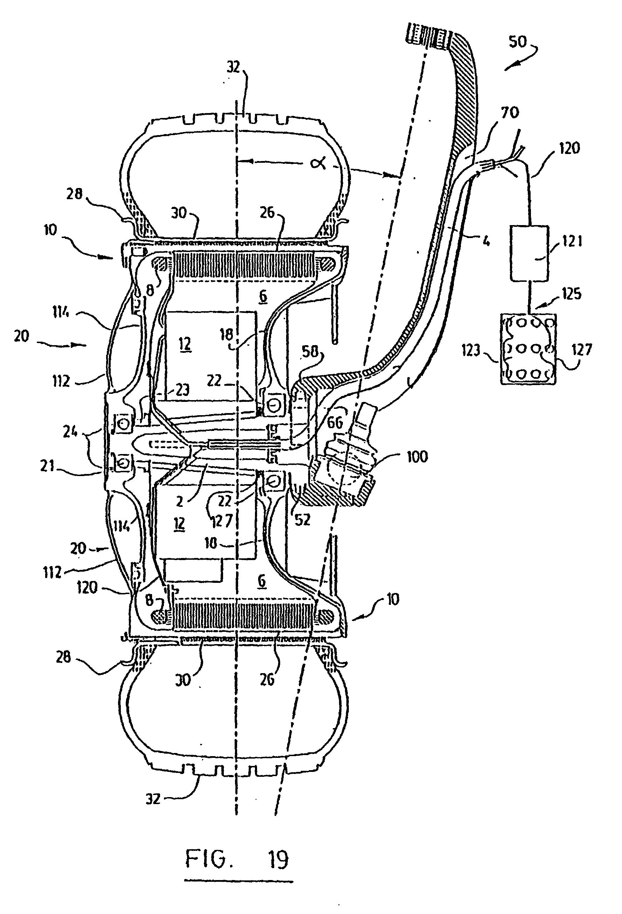

La Figure 19 est une vue de côté partiellement en coupe d'un autre mode de réalisation du moteur-roue électrique selon la présente invention;

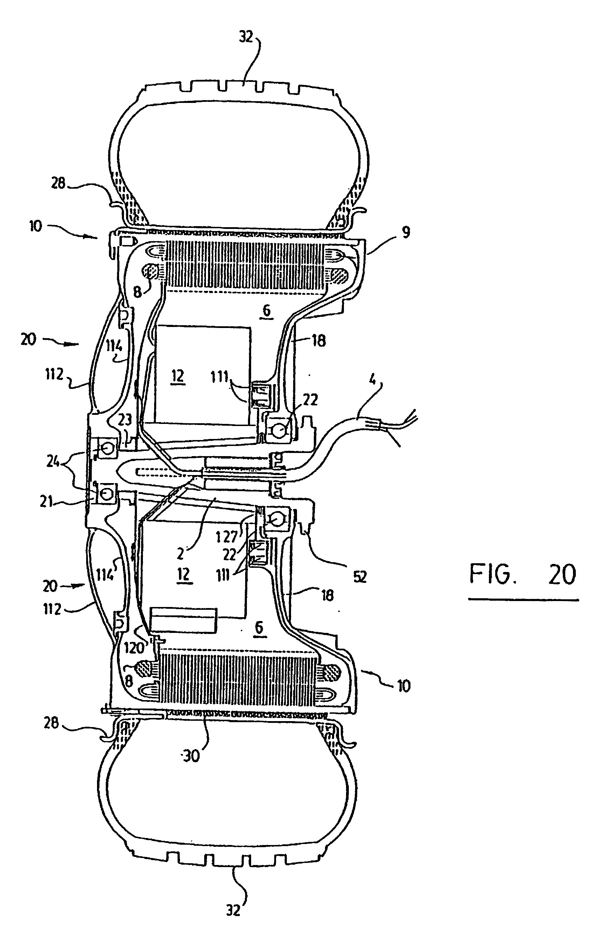

La Figure 20 est une vue de côté partiellement en coupe d'un autre mode de réalisation du moteur-roue électrique selon la présente invention;

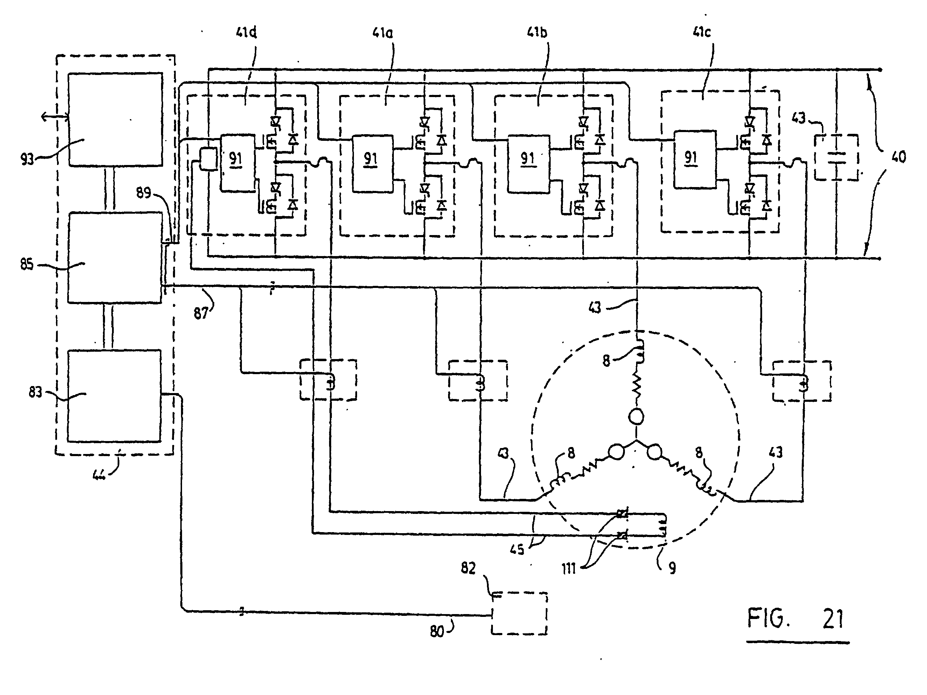

La Figure 21 est un diagramme-bloc schématique d'un autre mode de réalisation du moyen de conversion électrique selon la présente invention;

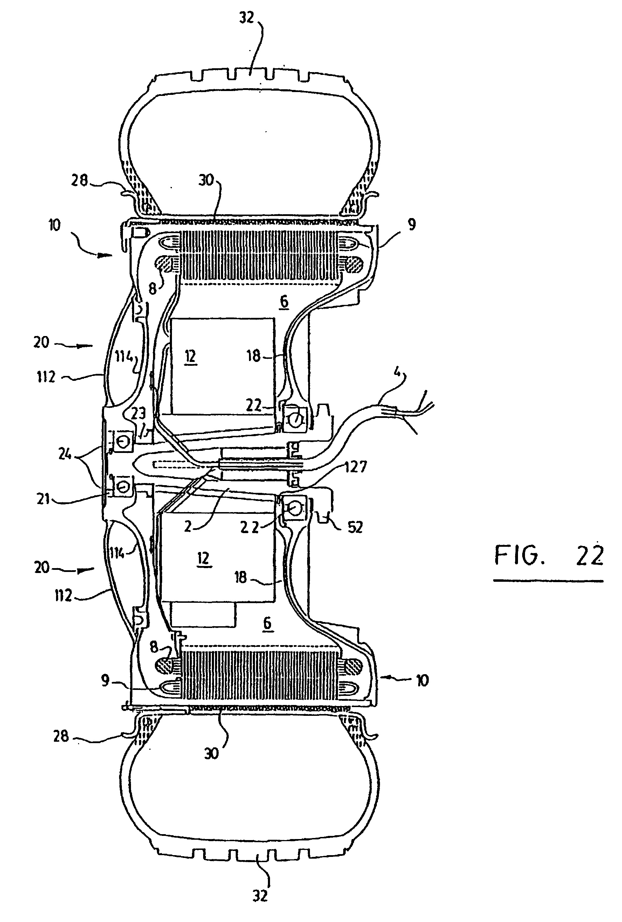

La Figure 22 est une vue de côté partiellement en coupe d'un autre mode de réalisation du moteur-roue électrique selon la présente invention;

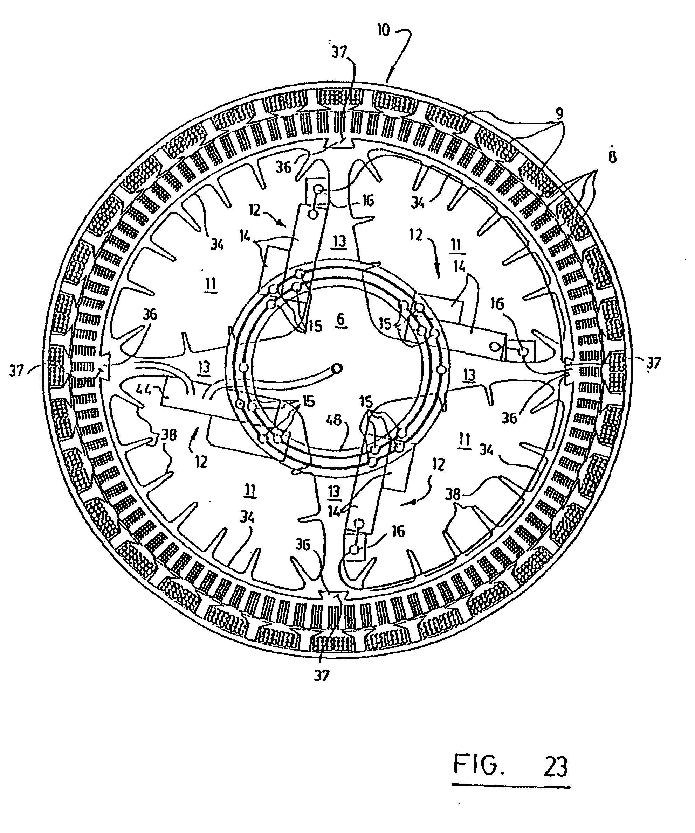

La Figure 23 est une vue de face partiellement en coupe du stator et du rotor du moteur-roue électrique montrés à la Figure 22;

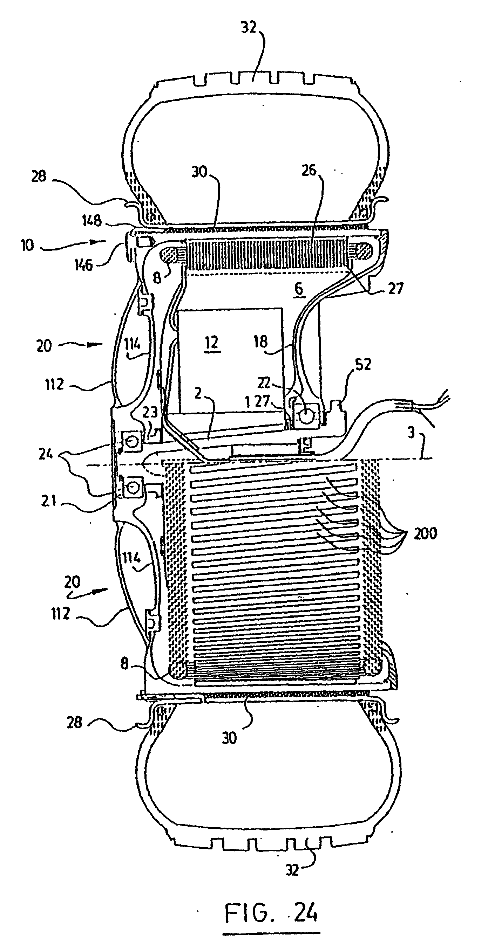

La Figure 24 est une autre vue de côté, partiellement en coupe du mode de réalisation du moteur-roue électrique montré à la Figure 1; et

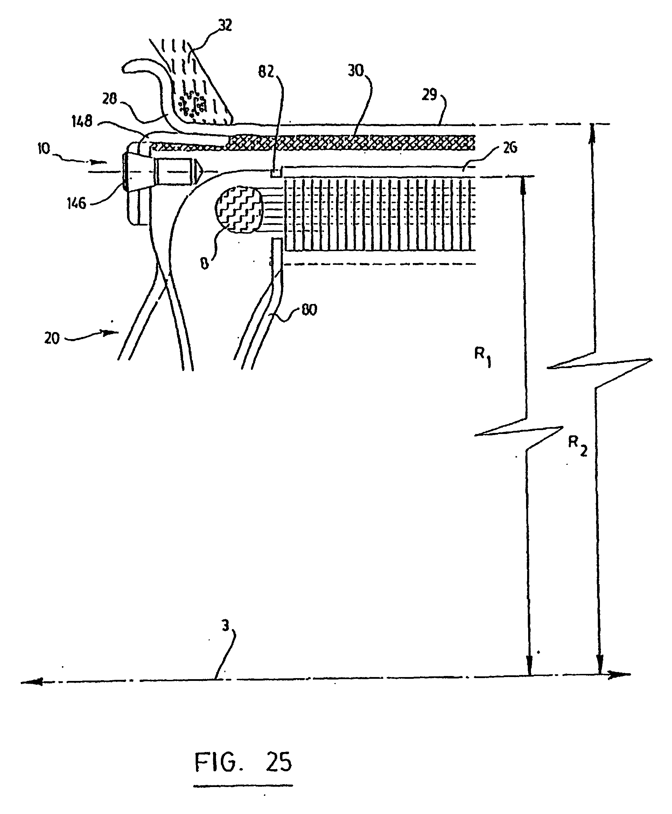

La Figure 25 est une vue agrandie d'une partie de la Figure 1.

## DESCRIPTION DÉTAILLÉE DES DESSINS

Dans les différentes figures des dessins, les éléments correspondants sont identifiés par les mêmes indices numériques.

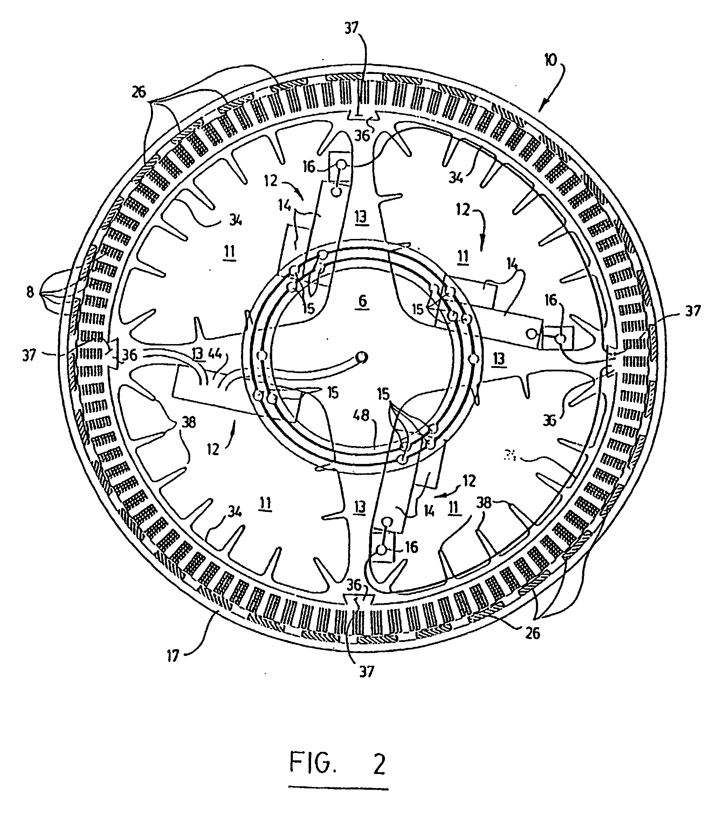

Si on se réfère maintenant aux Figures 1 et 2, on montre respectivement une vue de côté partiellement en coupe d'un mode de réalisation du moteur-roue électrique, en combinaison avec une jante 28, un pneu 32 et une bielle articulée 50; et une vue de face partiellement en coupe du rotor 10 et du stator 6 du moteur-roue électrique montré à la Figure 1. Le moteur-roue électrique comprend un arbre creux 2 ayant une première ouverture à une de ses extrémités et une seconde ouverture. La première ouverture reçoit des conducteurs 4 de l'extérieur du moteur-roue. Le stator 6 est coaxial avec l'arbre 2 et fixé à celui-ci, le stator 6 étant muni de parties creuses 11 et de bobinages 8.

Dans la Figure 2, seulement quelques sections de bobinage sont indiquées par le No. 8, mais on doit comprendre qu'il y a des bobinages tout autour du stator 6. Le stator 6 est fixé à l'arbre 2 mais peut être enlevé de celui-ci lorsque le moteur-roue n'est pas en opération.

Le rotor 10 est coaxial avec le stator 6 et est monté pour pouvoir tourner autour du stator 6. Le stator 6 comprend des ouvertures formant les parties creuses 11 entre les bras 13 pour réduire son poids. Le moteur-roue est aussi muni d'un système de conversion pour convertir un courant électrique d'entrée en un courant électrique alternatif et variable. Le système de conversion 12 comprend une unité de microprocesseur 44, un convertisseur courant continu/courant alternatif ayant une électronique de puissance 14, monté à l'intérieur des parties creuses 11, des bornes d'entrée 15 pour recevoir le courant électrique d'entrée amené au moyen de conducteurs 4 et des bornes de sortie 16 pour générer le courant électrique alternatif et variable. On doit comprendre que le système de conversion peut être réversible, de telle manière que le moteur électrique puisse être utilisé comme un générateur. La fréquence du courant électrique alternatif et variable est représentative d'une vitesse de rotation désirée du rotor 10, l'angle de phase du courant électrique alternatif et variable détermine si le moteur-roue fonctionnera comme un moteur ou comme un générateur et l'amplitude du courant alternatif et variable est représentative du couple désiré.

L'utilisateur du présent moteur roue peut utiliser des conducteurs de diamètre relativement petit pour amener une puissance électrique à l'intérieur du moteur-roue si une telle puissance est produite à partir d'un haut voltage parce que l'électronique de puissance 14 est à l'intérieur du moteur-roue. Une telle électronique de puissance 14 convertira le signal d'entrée à haut voltage et bas courant en un signal à courant élevé pour alimenter les bobinages 8 du stator en courant alternatif et variable. Etant donné que l'électronique de puissance 14 est déjà à l'intérieur du moteur-roue, des conducteurs de large diamètre requis pour amener le courant électrique du système de conversion 12 aux bobinages 8 du stator seront relativement courts. Bien sûr, l'électronique de puissance 14 comprend des condensateurs, des transistors, des diodes et autres composantes telles que connues par l'homme de l'art.

Pour réduire le poids ou le diamètre des conducteurs électriques, un voltage d'alimentation élevé peut être utilisé selon la relation suivante:

$$P = IV,$$

où P est la puissance, I est le courant et V est le voltage. Si V augmente, alors I est réduit. A basse vitesse, la puissance est basse, ceci implique que le courant qui alimente le convertisseur est également bas puisque le voltage est constant. Mais, si un couple élevé est requis, le courant qui alimente les bobinages du stator doit aussi être élevé. Le montage de l'électronique de puissance du convertisseur à l'intérieur du boîtier permet de choisir des conducteurs d'alimentation électriques par rapport à une puissance de moteur désirée tout en permettant un couple élevé à basse vitesse. De plus, le convertisseur permet d'adapter l'impédance du moteur par rapport à celle de la source d'alimentation en voltage élevé.

Le stator 6 comprend une partie centrale attachée à l'arbre 2, des bras 13 s'étendant radialement à partir de la partie centrale, et une pièce polaire circulaire et périphérique incluant des lames de métal 27 sur laquelle des bobinages 8 sont enroulés. La pièce polaire est fixée aux extrémités périphériques des bras 13.

Le rotor 10 comprend un boîtier ayant une paroi cylindrique 17 ayant une surface interne munie d'un moyen magnétique 26 entourant le stator et séparé de celui-ci par un entrefer. Etant donné que l'entrefer est relativement petit, il ne peut pas être vu sur les figures 1 et 2 mais, sa localisation est indiquée sur la Figure 25 au moyen de $R_1$. Le boîtier comprend une paroi interne 18 disposée sur un côté de la paroi cylindrique 17, et une autre paroi 20 disposée sur l'autre côté de la paroi cylindrique 17. L'arbre 2 se prolonge à travers une partie centrale de la paroi interne 18.

Le boîtier qui fait partie du rotor 10 enferme de façon étanche l'arbre 2, le stator 6 et le système de conversion 12. Un joint étanche 123 est prévu. Le moteur-roue comprend un premier roulement à bille 22 relié à la paroi interne 18, et un second roulement à bille 24 relié à la paroi externe 20. Les roulements à billes 22 et 24 sont respectivement montés de part et d'autre de l'arbre 2 de façon à ce que le rotor 10 puisse tourner par rapport au stator 6 au moyen des roulements à billes 22 et 24. Un boulon fileté 23 est prévu pour fixer le stator 6 par rapport à l'arbre 2. Un anneau d'arrêt 21 est également prévu. Un anneau de compression 127 est prévu pour fixer le roulement à billes 22.

Le stator 6 a besoin d'au moins deux bras disposés entre les ouvertures pour supporter la pièce polaire du stator 6. Aussi, le support peut comprendre trois bras également espacés, s'étendant radialement jusqu'aux extrémités périphériques du stator 6. Dans la Figure 2, on peut voir que le stator 6 comprend quatre bras 13 également espacés. Dans le mode de réalisation montré dans ces Figures 1 et 2, le moyen magnétique du rotor 6 comprend une série d'aimants permanents 26. Dans la Figure 2, seulement quelques aimants sont identifiés par le numéro 26, mais on doit comprendre que ces aimants 26 sont prévus tout autour du stator 6. Le stator 6 est fait en partie d'un matériau de poids léger pouvant conduire la chaleur. De préférence, ce matériau est un alliage d'aluminium. Le moteur-roue comprend en outre une jante 28 fixée autour d'une surface externe du boîtier, et une bande 30 faite d'un élastomère et montée entre la jante 28 et le boîtier. La jante 28 est adaptée pour recevoir le pneu 32. La jante 28 est à fond plat. Les aimants 26 sont faits de préférence de néodyme, de fer et de bore. La bande 30 empêche une pénétration d'eau ou de poussière entre le boîtier et la jante 28 pour éviter le débalancement de la roue.

Les extrémités périphériques des bras 13 sont fixés sur la pièce polaire du stator 6 au moyen d'un membre circulaire 34 qui fait partie intégrante des extrémités périphériques des bras 13. Le membre circulaire 34 a sa surface externe munie d'encoches 36. La pièce polaire du stator 6 a une surface interne munie de langues saillantes 37 de forme complémentaire qui sont aptes à coopérer avec les encoches 36 pour fixer la pièce polaire du stator 6 sur le membre circulaire 34. Le membre circulaire 34 a une surface interne munie de parties en saillies 38, ainsi un échange efficace de chaleur peut être obtenu au moyen des parties en saillies 38 lorsqu'une circulation d'air est produite à l'intérieur du boîtier. Seulement quelques parties en saillie sont indiquées par le numéro 38 de façon à ne pas surcharger la Figure 2. Le support du stator 6 et le membre circulaire 34 sont faits d'un alliage d'aluminium tandis que la pièce polaire du stator 6 est faite d'acier.

Il est à noter que les extrémités de la croix formée par les bras 13 du stator 6 sont alignées avec les encoches 36 pour des raisons mécaniques. Ainsi, les parties en saillie 38 qui sont disposées le long du membre circulaire 34 sont, par rapport à leur dimension longitudinale, de préférence déphasées par rapport à l'arbre du moteur-roue, le long de la direction circonférentielle du membre 34 de façon à le renforcer mécaniquement.

Si on se réfère maintenant aux Figures 1, 2 et 25, l'entrefer est positionné à une distance prédéterminée $R_1$ à partir de l'axe central 3 de l'arbre 2. La jante 28 a une surface 29 pour recevoir le pneu 32 qui est positionné à une distance prédéterminée $R_2$ de l'axe central 3 de l'arbre 2. $R_1/R_2$ doit être substantiellement compris entre 0.65 et 0.91 pour obtenir un moteur-roue efficace. Plus haut est le ratio $R_1/R_2$, meilleure est l'efficacité du moteur-roue. Mais, comme il y a des limitations physiques, le moteur-roue montré dans les Figures 1, 2 et 25 a substantiellement un ratio $R_1/R_2$ de 0.91.

Pour un moteur avec un entrefer radial, le couple T est proportionnel à $L \cdot R_1^2 \cdot I_B$, où L est la largeur du pôle, $R_1$ est le rayon de l'entrefer et $I_B$ est le courant de bobinage. Pour la conception du présent moteur-roue, la largeur L de la pièce polaire a été maximisée. En ayant plusieurs pôles, le poids de la pièce polaire du circuit magnétique peut être réduit pour ainsi réduire le poids du rotor et le moment d'inertie du rotor, pour ainsi permettre la présence d'une cavité pour le montage d'un moyen de freinage. Le présent moteur-roue augmente le couple T en ayant une pièce polaire large et en ayant un ratio élevé de $R_1/R_2$ où la limite théorique qui ne peut pas être atteinte est 1. Le présent moteur-roue fournit également une puissance élevée parce que P = T · ω qui est proportionnel à $L \cdot R_1^2 \cdot I \cdot \omega$, où ω est la fréquence angulaire du rotor. Le présent moteur-roue comprend un stator en forme de croix pour réduire le poids du moteur-roue, pour permettre un refroidissement des bobinages, et pour permettre un espace dans les parties creuses 11 qui fourniront un espace pour monter le système de conversion. Le stator en forme de croix supporte le système de conversion et est utilisé comme un élément de refroidissement.

Le moteur-roue a de préférence trente-deux pôles. Ce moteur-roue peut fonctionner avec seize pôles mais il est préférable d'avoir un nombre élevé de pôles pour réduire le poids du moteur-roue. Les conducteurs 4 sont de préférence faits d'un câble coaxial incluant une fibre optique. Ce câble coaxial prévient l'émission de radiations.

Dans la description qui va suivre, les mêmes numéros de référence se rapportent à des éléments semblables à travers le jeu de dessins.

Si on se réfère maintenant aux Figures 1, 2 et 18, le système de conversion comprend un convertisseur courant continu/courant alternatif ayant une entrée 40 pour recevoir un courant continu des bornes d'entrée 15, et trois sorties 42 pour générer trois courants de phase alternatifs dans les bornes de sortie 16. Les courants alternatifs ne sont pas nécessairement trois courants de phase, des courants polyphasés peuvent également être utilisés. Le système de conversion comprend aussi une unité de microprocesseur 44 branchée aux bras 41a, 41b, 41c du convertisseur pour contrôler son opération. L'unité de microprocesseur peut être localisée à l'extérieur du moteur-roue. Le système de conversion montré à la Figure 18 peut être utilisé lorsque le rotor n'a pas à être alimenté avec un courant électrique. comme on peut le voir à la Figure 2, le stator 6 est en forme de croix et a quatre bras 13. Le convertisseur comprend trois bras 41a, 41b et 41c qui génèrent respectivement les trois courants de phase alternatifs, les bras 41a, 41b et 41c étant fixés respectivement à trois des quatre bras 13 du stator 6. Ces trois bras 41a, 41b et 41c font partie de l'électronique de puissance 14 montrée à la Figure 2.

L'électronique de puissance montrée à la Figure 2 comprend les bras 41a, 41b, 41c du convertisseur montrés à la figure 18 mais comprend également le condensateur 43 montré à la Figure 18. Dans cette Figure 18, seulement un condensateur 43 est montré pour simplifier cette figure 18, mais dans le mode de réalisation montré à la Figure 2, le condensateur 43 est distribué en trois condensateurs disposés respectivement sur trois des quatre bras 13 montrés à la Figure 2. Il n'est pas essentiels que les amplificateurs de commande 91 soient à l'intérieur du boîtier. Chacun des bras 41a, 41b, 41c du convertisseur comprend une section de commutation et une section de commande qui est formée des amplificateurs de commande 91. L'unité de microprocesseur 44 est fixée sur le quatrième des bras 13. Il est à noter que l'unité de microprocesseur 44 peut également être montée à l'extérieur du moteur-roue parce qu'elle ne génère pas un courant élevé. Le moteur-roue comprend en outre deux bus de distribution et d'alimentation circulaires 48 branchés au bras 41a, 41b, 41c du convertisseur et à l'unité de microprocesseur 44, ainsi le courant continu amené par les conducteurs peut être distribué au bras 41a, 41b, 41c du convertisseur, et à l'unité de microprocesseur 44 au moyen du bus 48. Veuillez noter que le convertisseur peut être un convertisseur courant alternatif/courant alternatif où un courant électrique alternatif de haut voltage est amené par les conducteurs.

Si on se réfère maintenant aux Figures 1, 12, 13, 14 et 15, on peut voir que l'arbre 2 est muni d'un moyen de branchement à sa première extrémité par lequel le moteur-roue peut être branché à un membre de support. Ce membre de support est une bielle articulée 50. Ce moyen de branchement est fait d'un membre annulaire 52 ayant une bordure externe munie de façon régulière d'encoches 54 alternant avec des parties en saillies 56 de façon à ce que le membre annulaire 52 puisse être engagé et verrouillé avec une partie complémentaire 53 de la bielle articulée 50.

Les parties en saillie de la bordure externe ont une largeur qui varie dans la direction circonférentielle. La partie complémentaire de la bielle articulée 50 a également une section annulaire 58 ayant un diamètre suffisant pour que la section annulaire 58 puisse être glissée sur la bordure externe de l'arbre 2. La section annulaire 58 a des encoches 60 et des parties en saillie 62 de forme complémentaire qui sont adaptées pour coopérer avec des parties en saillie 56 et les encoches 54 correspondantes de la bordure externe du membre annulaire 52. Les parties en saillie 62 de la section annulaire 58 ont une largeur qui varie dans la direction circonférentielle de façon à ce que la section annulaire 58 puisse glisser sur la bordure externe et tourner par rapport à ladite bordure externe pour être coincée dans une position assemblée. Egalement, une clé 66 est prévue, elle a des langues 68 qui peuvent être insérées dans des cavités 55 qui sont produites lorsque la section annulaire 58 est tournée par rapport à la bordure externe de l'arbre 2 pour verrouiller l'arbre 2 par rapport à la bielle articulée 50. Des trous 63 sont prévus pour fixer un frein à disque (montré sur les Figures 16 et 17).

La bielle articulée 50 est munie d'une fente interne allongée 70 ayant une première extrémité adjacente à la section annulaire 58 et une seconde extrémité éloignée de ladite section annulaire 58, ainsi les conducteurs 4 peuvent être amenés à l'arbre 2 le long de ladite fente allongée 70. La clé 66 a une section allongée 72 munie d'une cavité interne allongée, la section allongée 72 étant apte à coopérer avec la fente interne 70 de la bielle 50 le long d'une partie de sa longueur pour protéger les conducteurs 4. La partie de la fente 70 qui n'est pas protégée par la section allongée 72, est munie d'un élément de protection (non montré) pour couvrir les conducteurs 4. Il est à noter que la bordure inférieure des langues 68 est légèrement en biais de façon à faciliter la pénétration et le verrouillage des langues 68 dans les cavités 55. Les trous 65 sont prévus pour fixer la clé 66 sur l'arbre 2. Les trous filetés 67 sont prévus pour faciliter l'enlèvement de la clé 66.

Si on se réfère maintenant plus spécifiquement à la Figure 15, la première extrémité de l'arbre a une partie interne munie d'une cavité 74 ayant des bordures tranchantes 76 prenant la forme de coins carrés de façon à ce que ladite cavité puisse recevoir une clé (non montrée sur les Figures) pour tourner l'arbre 2.

Si on se réfère maintenant plus spécifiquement aux Figures 1, 18 et 25, un moyen de mesure pour mesurer la vitesse de rotation et la position du rotor 10 par rapport au stator 6 est prévu, ce moyen comprend une fibre optique 80 ayant une première extrémité branchée à l'unité de microprocesseur 44, et une seconde extrémité positionnée pour être adjacente au rotor 10. Le moyen de mesure comprend également un réflecteur de lumière circulaire 82 monté sur le rotor 10 de telle manière que lorsque ledit rotor 10 tourne, le réflecteur passe devant la seconde extrémité de la fibre 80, ainsi la vitesse de rotation et la position du rotor 10 par rapport au stator 6 peuvent être calculées au moyen de l'unité de microprocesseur 44. Il est à noter que le réflecteur circulaire 82 est fait d'une série de réflecteurs ayant différentes caractéristiques de réflection de façon à ce que la position du rotor 10 par rapport au stator 6 puisse être déterminée en tout temps. La fibre optique 80 se compose d'au moins une fibre.

Si on se réfère maintenant plus spécifiquement à la Figure 18, la fibre 80 et le réflecteur 82 forment un encodeur qui est branché à un décodeur de position 83 de l'unité de microprocesseur 44. Le décodeur de position 83 comprend un coupleur optique, une source de lumière, un photo-détecteur et d'autres composantes électroniques. L'unité de microprocesseur 44 comprend également un contrôleur 85 ayant une entrée 87 pour détecter les courants dans les bobinages 8 du stator et une sortie 89 pour déclencher les bras 41a, 41b, 41c du convertisseur au moyen des amplificateurs de commande 91. L'unité de microprocesseur 44 est également munie d'une interface de communication 93 pour la relier à un autre dispositif intelligent. Il n'est pas nécessaire que les amplificateurs de commande 91 soient à l'intérieur du boîtier.

Si on se réfère maintenant aux Figures 1, 16 et 17, on peut voir que la paroi interne 18 du boîtier a une surface externe de forme concave pour produire, lorsque le rotor 10 tourne, une circulation d'air vers la périphérie de la paroi interne 18. La surface externe est munie d'une série de lames allongées et parallèles 90 s'étendant dans la direction de l'arbre 2. Les lames ont leurs extrémités libres qui définissent un espace 92 dans lequel une partie d'un moyen de freinage 94 peut être montée, ainsi un échange efficace de chaleur peut être obtenu à travers la paroi interne 18 et le moyen de freinage 94 peut être refroidi par la circulation d'air produite le long de la paroi interne 18.

Si on se réfère maintenant plus spécifiquement aux Figures 16 et 17, on peut voir que le moyen de freinage 94 est un frein à disque ayant un disque 96 boulonné sur la paroi interne 18. Comme il est connu dans l'art, ce disque de freinage comprend un étrier 98 apte à coopérer avec le disque 96. Montré d'une façon schématique, on peut voir le joint d'articulation à rotule 100 et le bras de direction 102 du système de direction. Chacune des lames 90 est munie de cavités filetés 104 servant à monter un frein à tambour à la place du frein à disque 94. Des boulons 95 sont prévus pour fixer le frein à disque sur la paroi interne 18.

On peut voir des attaches 106 pour fixer le frein à disque 94 sur la bielle 50. On peut voir également des boulons 108 pour supporter l'étrier, et des pistons 110 aptes à coopérer avec des coussinets 99. A partir des Figures 1, 16 et 17 on peut voir que le joint d'articulation à rotule du système de direction est passablement près de l'arbre 2 de façon à ce que l'angle alpha entre l'axe de rotation du moteur-roue et l'axe déterminé par la bielle 50 et le joint d'articulation à rotule 100 est avantageux. Il est à noter que la géométrie de la paroi interne 18 permet cette position avantageuse du joint d'articulation à rotule 100 par rapport au moteur-roue.

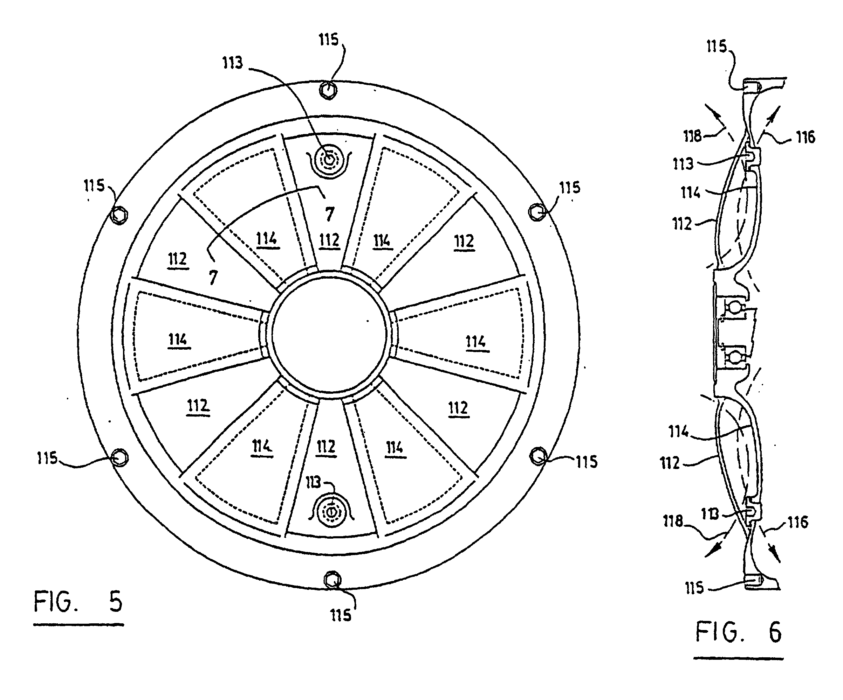

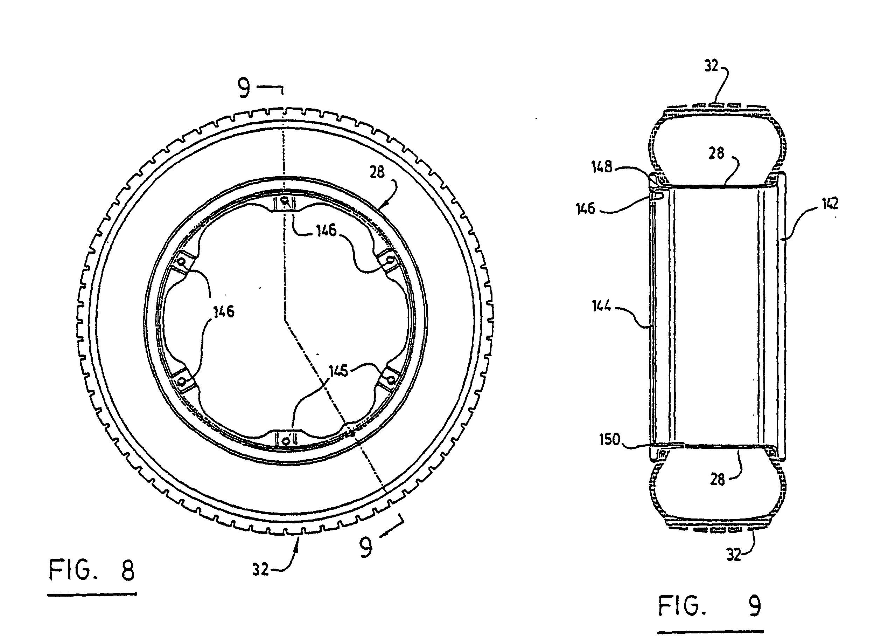

Si on se réfère maintenant aux Figures 1, 5, 6 et 7, la paroi externe du boîtier comprend des sections convexes et concaves 112 et 114 qui alternent le long de sa direction circonférentielle, de telle manière que, lorsque le rotor tourne, une circulation d'air est produite à l'intérieur du boîtier au moyen de la section convexe 112 tel qu'indiqué par les flèches 116, et une circulation d'air est produite le long des parties externes de la section concave 114 tel qu'indiqué par les flèches 118, ainsi un échange efficace de chaleur peut être obtenu à travers la paroi externe. Il est à noter que la Figure 6 est une vue de côté partiellement en coupe de la Figure 5. Des ouvertures avec bouchon 113 sont prévues pour permettre un accès à l'intérieur du boîtier. Des boulons 115 sont prévus pour fixer la jante 28.

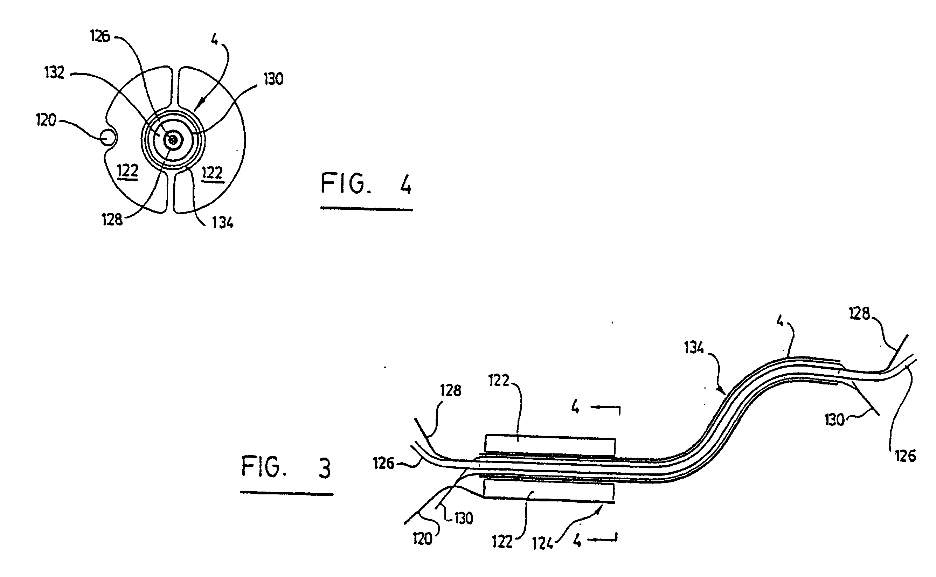

Si on se réfère maintenant aux Figures 1, 3 et 4, le moteur-roue comprend en outre un moyen pour assécher incluant un tuyau à air 120 ayant une extrémité disposée à l'intérieur du boîtier, une chambre 122 disposée à l'extrémité externe du tuyau 120 et un matériau de dessiccation (non montré) disposé à l'intérieur de la chambre 122, ainsi lorsque le rotor 10 tourne, une circulation d'air est produite à l'intérieur du tuyau 120 et à travers la chambre 122 pour assécher l'air à l'intérieur du boîtier. La chambre 122 est annulaire, allongée et disposée à l'intérieur de l'arbre creux 2. La chambre 122 est ouverte à chacune de ses extrémités. L'ouverture de l'arbre qui est adjacente à la bielle articulée 150 est étanche à l'air. On peut voir sur la Figure 1 qu'une extrémité du tuyau 120 est adjacente à la partie périphérique du stator 6, le tuyau 120 est monté entre la paroi externe 20 et le stator 6 jusqu'à ce qu'il atteigne l'ouverture de l'arbre 2, alors il est disposé le long de la chambre 122 de telle manière que son autre extrémité 124 soit placée à une extrémité de la chambre tel que montré aux Figures 3 et 4. L'extrémité 124 du tuyau 120 est disposée entre l'extrémité étanche à l'air de l'arbre creux et la chambre 122 de façon à ce que l'air circulant à travers le tuyau 120 doive aller à travers la chambre où il est asséché.

Les conducteurs 4 ont dans leur partie centrale une fibre optique 126, un premier conducteur électrique 128 et un second conducteur électrique 130 séparé du premier conducteur par un matériau isolant 132. Les conducteurs 4 sont protégés par une gaine externe 134.

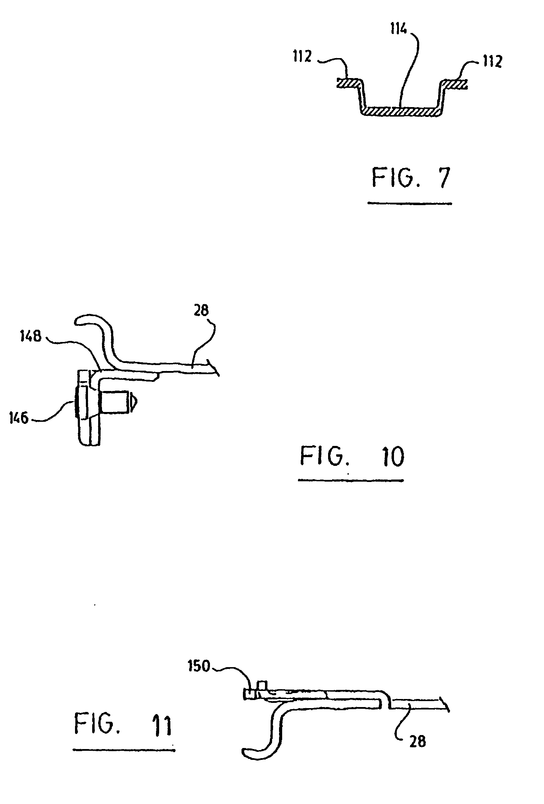

Si on se réfère maintenant aux Figures 8, 9, 10 et 11, on peut voir un pneu 32 qui est fixé à la jante 28 d'une manière permanente lors de l'assemblage du moteur-roue. Le moteur-roue est muni d'une jante à fond plat 28, d'une première bride de côté 142 qui peut être soudée sur la jante 28, et d'une seconde bride de côté 144, qui est fixée sur la jante 28 au moyen de boulons 146 et d'un membre en forme de L 148 soudé sur la jante 28. La relation entre la jante 28, un des boulons 146 et le membre en forme de L 148, peut être vue plus facilement à la Figure 10. Le pneu 32 peut être gonflé au moyen d'une valve 150 qui permet un accès à l'intérieur du pneu 32. Cette valve 150 peut être vue de façon plus détaillée à la Figure 11.

Etant donné que la jante 28 est à fond plat, le pneu 32 ne peut pas être enlevé de la jante 28. Avec un tel moteur-roue, lorsque le pneu est usé, la jante 28 et le pneu doivent être remplacés.

Si on se réfère maintenant à la Figure 19, on peut voir un moteur-roue semblable à celui montré à la Figure 1, dans lequel le moyen pour assécher est différent. Ce moyen pour assécher comprend un tuyau à air 120 ayant une extrémité disposée à l'intérieur du boîtier, et une chambre 121 munie d'un ballon gonflable 123 monté dans un boîtier 127, disposé à l'autre extrémité 125 du tuyau 120. Un matériau de dessiccation est disposé à l'intérieur de la chambre 121, ainsi, lorsque la température ou la pression atmosphérique changent, une circulation d'air est produite à l'intérieur du tuyau 120 et à travers la chambre 121 pour assécher l'intérieur du boîtier. Comme on peut le voir, la chambre 121 est disposée à l'extérieur du moteur-roue. L'ouverture de l'arbre 2 qui est adjacent à la bielle articulée 50 est étanche à l'air. Le tuyau 120 est utilisé comme une sortie et comme une entrée pour la chambre 121.

Si on se réfère maintenant à la Figure 20, on peut voir un moteur-roue électrique dans lequel le rotor comprend un moyen magnétique incluant une pièce polaire fait de lames de métal sur laquelle est enroulée un bobinage 9, le stator est muni de balais 111 qui sont reliés à une sortie du système de conversion 12. Le rotor est muni d'une surface de contact conductrice disposée de façon à pouvoir coopérer avec les balais 111. La surface de contact est branchée au bobinage 9 du rotor 10.

Si on se réfère maintenant plus spécifiquement aux Figures 20 et 21, le système de conversion 12 comprend un convertisseur courant continu/courant alternatif ayant quatre bras 41a, 41b, 41c et 41d, une entrée pour recevoir un courant continu à partir des bornes d'entrée 40 et quatre sorties 45 et 43 pour générer un courant continu pour le bobinage 9 du rotor 10 et trois courants de phase alternatifs pour les bobinages 8 du stator 6. Le système de conversion comprend également une unité de microprocesseur 44 branchée aux bras 41a, 41b, 41c et 41d, pour contrôler son opération. Le bobinage 9 et les lames du rotor 10 sur lesquelles le bobinage 9 est enroulé peuvent être remplacés par un anneau conducteur.

Si on se réfère maintenant aux Figures 22 et 23, on peut voir un moteur-roue comportant un rotor à induction. Le rotor comprend un moyen magnétique incluant une pièce polaire faite de lames de métal sur laquelle le bobinage 9 est enroulé, ainsi un courant électrique peut être induit dans le bobinage 9 du rotor au moyen d'un champ électromagnétique produit par le courant électrique injecté dans les bobinages 8 du stator 6.

Le numéro de référence 8 dans la Figure 23, représente tous les bobinages qui sont disposés autour du stator même si seulement une partie des bobinages est indiquée. Egalement, le numéro de référence 9, dans la Figure 23, représente le bobinage qui est disposé tout autour du rotor. Le système de conversion 12 comprend un convertisseur courant continu/courant alternatif ayant trois bras 41a, 41b, 41c, une entrée pour recevoir un courant continu à partir des bornes d'entrée 15 qui sont branchées au bus 48 et trois sorties qui génèrent trois courants de phase alternatifs dans les bornes de sortie 16. Egalement, le système de conversion 12 comprend une unité de microprocesseur 44 branchée au convertisseur pour contrôler son opération.

Comme on peut le voir à la Figure 23, le stator est en forme de croix et a quatre bras 13. Le convertisseur comprend une électronique de puissance qui est faite en partie des trois bras du convertisseur qui génèrent respectivement les trois courants de phase alternatifs. Les bras de convertisseur sont fixés respectivement sur trois des quatre bras 13. Le moteur-roue comprend en outre deux bus d'alimentation et de distribution circulaires branchés à l'électronique de puissance 14 et à l'unité de microprocesseur 44.

L'entrefer est positionné à une distance prédéterminée $R_1$ de l'axe central 3 de l'arbre 2. La jante 28 a une surface pour recevoir le pneu 32 qui est positionné à une distance prédéterminée $R_2$ de l'axe central 3 de l'arbre 2. Le ratio $R_1/R_2$ est de l'ordre de 0.65 à 0.80 dans le cas où le rotor est muni d'un bobinage. Plus haut est le ratio, meilleure est l'efficacité du moteur-roue. Dans le cas montré aux Figures 22 et 23, le ratio est de l'ordre de 0.80.

Si on se réfère maintenant à la Figuré 24, on peut voir que le stator 6 est cylindrique et muni de fentes longitudinales et parallèles 200 pour recevoir les bobinages 8 du stator 6. De façon à ne pas surcharger la Figure 24, seulement quelques fentes ont été identifiées par le numéro 200. Les fentes sont courbées par rapport à l'axe longitudinal 3 de l'arbre 2 de façon à ce que chacune des fentes 200 ait son extrémité inférieure qui soit substantiellement alignée avec l'extrémité supérieure de la fente adjacente de façon à produire un couple régulier lorsque le moteur-roue est en opération.

**Revendications**

1. Moteur-roue électrique comprenant :

   • un arbre creux (2) comportant un axe longitudinal (3), une première et une seconde extrémités, ladite première extrémité étant munie d'une ouverture pouvant recevoir des conducteurs (4) de l'extérieur du moteur-roue, une seconde ouverture étant prévue entre les deux extrémités ou à la seconde extrémité ;
   • un stator (6) coaxial avec ledit arbre (2) et fixé audit arbre, ledit stator (6) comprenant une partie centrale fixée audit arbre (2), un support (13) s'étendant de façon radiale à partir de ladite partie centrale, et une pièce polaire périphérique et circulaire, ladite pièce polaire étant fixée à des extrémités périphériques dudit support (13);
   • un rotor (10) agencé coaxialement audit stator (6) de manière à pouvoir tourner autour dudit stator (6), ledit rotor (10) comprenant un boîtier ayant une paroi cylindrique (17), une paroi interne (18) disposée sur un coté de ladite paroi cylindrique (17) et une paroi externe (20) disposée sur l'autre coté de ladite paroi cylindrique (17), ladite paroi cylindrique (17) présentant une surface interne munie d'un moyen magnétique entourant ledit stator (6) et séparé dudit stator (6) par un entrefer, ledit arbre (2) se prolongeant à travers une partie centrale de ladite paroi interne (18) ;

**caractérisé en ce que** ladite paroi interne (18) présente un renflement annulaire qui s'étend vers l'intérieur de la largeur de la paroi cylindrique (17) pour délimiter un espace circulaire et concentrique (92) par rapport à ladite première extrémité dudit arbre (2), et **en ce que** ledit arbre creux (2) a une longueur plus petite que la largeur de ladite paroi cylindrique (17) de façon à ce qu'un joint d'articulation à rotule (100) associé à une bielle (50) apte à être connectée audit arbre (2) soit positionné au moins en partie dans ledit espace circulaire concentrique (92).

2. Moteur-roue selon la revendication 1, dans lequel ledit espace (92) a des dimensions prédéterminées de manière à permettre à au moins une partie d'un moyen de freinage (94) d'être montée à l'intérieur dudit espace (92).

3. Moteur-roue selon la revendication 1 ou 2, dans lequel ladite pièce polaire périphérique du stator (6) comporte des lames de métal (27) sur lesquelles sont enroulés des bobinages (8).

4. Moteur-roue selon l'une quelconque des revendications 1 à 3, dans lequel ledit support (13) est muni d'ouvertures pour réduire son poids.

5. Moteur-roue selon la revendication 4, dans lequel ledit support (13) comprend au moins deux bras (13) entre lesdites ouvertures.

6. Moteur-roue selon l'une quelconque des revendications 1 à 5, dans lequel ledit moyen magnétique du rotor (10) est muni d'une série d'aimants permanents (26).

7. Moteur-roue selon l'une quelconque des revendications 1 à 5, dans lequel ledit moyen magnétique du rotor (10) comprend une pièce polaire faite de lames de métal sur laquelle est enroulé un bobinage (9), ledit stator (6) étant muni de balais (111) reliés à une sortie d'un moyen de conversion (12), et ledit rotor (10) étant en outre muni de surfaces de contact conductrices disposées de manière à coopérer avec lesdits balais (111), lesdites surfaces de contact étant reliées audit bobinage (9) du rotor (10).

8. Moteur-roue selon l'une quelconque des revendications 3 à 5, dans lequel ledit moyen magnétique du rotor (10) comprend une pièce polaire faite de lames de métal sur laquelle est enroulé un bobinage (9), ainsi un courant électrique peut être induit dans ledit bobinage (9) dudit rotor (10) au moyen d'un champ électromagnétique produit par un courant électrique injecté dans lesdits bobinages du stator (6).

9. Moteur-roue selon l'une quelconque des revendications 1 à 8, dans lequel ladite paroi externe (20) dudit boîtier comporte des sections convexes et concaves (112, 114) disposées en alternance le long d'une direction circonférentielle de ladite paroi externe (20), de sorte que lorsque ledit rotor (10) tourne, une circulation d'air est produite à l'intérieur dudit boîtier par lesdites sections convexes (112) et une circulation d'air est produite le long des parties externes desdites sections concaves (114) de façon à permettre un échange de chaleur efficace à travers ladite paroi externe (20).

10. Moteur-roue selon l'une quelconque des revendications 1 à 9, dans lequel est prévu un moyen de mesure pour mesurer la vitesse de rotation et la position dudit rotor (10) par rapport audit stator (6), ledit moyen de mesure comportant :

    • une fibre optique (80) présentant une première extrémité branchée à une unité de microprocesseur (44) et une seconde extrémité positionnée de manière adjacente audit rotor (10) ; et

    • un réflecteur de lumière circulaire (82) monté sur ledit rotor (10) de façon que, lorsque le rotor (10) tourne, ledit réflecteur (82) passe devant ladite seconde extrémité de ladite fibre (80), ladite vitesse de rotation et ladite position du rotor (10) pouvant ainsi être calculées au moyen de ladite unité de microprocesseur (44).

11. Moteur-roue selon l'une quelconque des revendications 1 à 10, dans lequel sont prévus un premier roulement à billes (22) relié à ladite paroi interne (18) et un second roulement à billes (24) relié à ladite paroi externe (20), lesdits roulements à billes (22, 24) étant respectivement montés de part et d'autre dudit arbre (2) de sorte que le rotor (10) puisse tourner par rapport audit stator (6) au moyen desdits roulements à billes (22, 24).

12. Moteur-roue selon l'une quelconque des revendications 1 à 11, dans lequel une jante (28) est fixée autour d'une surface externe dudit boîtier, une bande d'élastomère (30) étant montée entre ladite jante (28) et ledit boîtier, ladite jante (28) étant adaptée pour recevoir un pneu (32).

**13.** Moteur-roue selon la revendication 12, dans lequel ladite jante (28) est plate.

**14.** Moteur-roue selon l'une quelconque des revendications 3 à 13, dans lequel ledit stator (6) est cylindrique et est muni de fentes longitudinales et parallèles (200) servant à recevoir lesdits bobinages (8), lesdites fentes étant inclinées par rapport audit axe longitudinal (3) de sorte que chaque fente (200) présente une extrémité basse sensiblement alignée avec une extrémité haute de la fente adjacente, de manière à fournir un couple régulier lorsque ledit moteur-roue est en opération.

**15.** Moteur-roue selon l'une quelconque des revendications 1 à 14, dans lequel ledit support (13) comporte au moins trois bras (13) également espacés s'étendant de façon radiale jusqu'aux extrémités périphériques dudit support (13).

**16.** Moteur-roue selon la revendication 15, dans lequel ledit support (13) comporte quatre bras (13) également espacés.

**17.** Moteur-roue selon l'une quelconque des revendications 1 à 16, dans lequel ledit stator (6) comprend un matériau léger pouvant conduire la chaleur.

**18.** Moteur-roue selon la revendication 17, dans lequel ledit matériau est un alliage d'aluminium.

**19.** Moteur-roue selon l'une quelconque des revendications 12 à 18, dans lequel ledit entrefer est positionné à une distance prédéterminée $R_1$ dudit axe (3), ladite jante (28) ayant une surface pour recevoir ledit pneu (32) positionnée à une distance prédéterminée $R_2$ dudit axe (3), le rapport $R_1/R_2$ étant sensiblement compris entre 0,65 et 0,91.

**20.** Moteur-roue selon la revendication 19, dans lequel ledit rotor est muni d'un bobinage (9) et ledit rapport $R_1/R_2$ est compris entre 0,65 et 0,80.

**21.** Moteur-roue selon l'une quelconque des revendications 1 à 20, dans lequel ladite première extrémité de l'arbre (2) comporte un moyen de branchement pour relier ledit arbre (2) à une extrémité de ladite bielle articulée (50), ladite extrémité de la bielle (50) étant munie dudit joint d'articulation à rotule (100).

**22.** Moteur-roue selon l'une quelconque des revendications 1 à 21, dans lequel ledit boîtier enferme de façon étanche ledit arbre (2) et ledit stator (6).

**23.** Moteur-roue selon la revendication 22, dans lequel ledit boîtier enferme, en outre, un moyen de conversion (12).

**Claims**

**1.** An electrically motorized wheel assembly comprising:

- a hollow shaft (2) comprising a longitudinal axis (3), a first and a second ends, said first end being provided with an opening able to receive conductors (4) from outside of said motorized wheel assembly, a second opening being located between the two ends or at the second end;

- a stator (6) coaxial with said shaft (2) and fixed to said shaft, said stator (6) comprising a central portion attached to said shaft (2), a support (13) extending radially from said central portion, and a peripheral and circular pole piece, said pole piece being fixed to peripheral ends of said support (13);

- a rotor (10) coaxial with said stator (6) and mounted so that it can turn around said stator (6), said rotor (10) comprising a housing having a cylindrical wall (17), an inner wall (18) extending on a side of said cylindrical wall (17) and an outer wall (20) extending on another side of said cylindrical wall (17), said cylindrical wall (17) having an inner surface provided with a magnetic means surrounding said stator (6) and separated from said stator (6) by an air gap, said shaft (2) extending through a central portion of said inner wall (18);

  **characterized in that** said inner wall (18) has an annular swelling extending towards the interior of the width of said cylindrical wall (17) to delimit a circular and concentric space (92) with respect to said first end of said shaft (2), and **in that** said hollow shaft (2) has a length shorter than the width of said cylindrical wall (17) so that a ball joint (100) connected to a connecting rod (50) connectable to said shaft (2) is positioned at least partly in said circular and concentric space (92).

**2.** A motorized wheel assembly as claimed in claim 1, wherein said space (92) has predetermined dimensions to allow at least a part of a breaking means (94) to be mounted within said space (92).

**3.** A motorized wheel assembly as claimed in claims 1 or 2, wherein said peripheral pole piece of said stator (6) comprises metal strips (27) on which coils (8) are wound.

**4.** A motorized wheel assembly as claimed in any one of claims 1 to 3, wherein said support (13) is provided with openings in order to reduce its weight.

5. A motorized wheel assembly as claimed in claim 4, wherein said support (13) comprises at least two arms (13) between said openings.

6. A motorized wheel assembly as claimed in any one of claims 1 to 5, wherein said magnetic means of said rotor (10) is provided with a series of permanent magnets (26).

7. A motorized wheel assembly as claimed in any one of claims 1 to 5, wherein said magnetic means of said rotor (10) comprises a pole piece made of metal strips round which a coil (9) is wound, said stator (6) being provided with brushes (111) connected to an output of said conversion means (12), and said rotor (10) being further provided with conductive contact surfaces disposed in a manner to interact with said brushes (111), said contact surfaces being connected to the coil (9) of said rotor (10).

8. A motorized wheel assembly as claimed in any one of claims 3 to 5, wherein said magnetic means of said rotor (10) comprises a pole piece made of metals strips round which a coil (9) is wound, thus an electric current can be induced in said coil (9) of said rotor (10) by means of an electromagnetic field produced by an electrical current injected into said coils (9) of said stator (6).

9. A motorized wheel assembly as claimed in any one of claims 1 to 8, wherein said outer wall (20) of said housing comprises convex and concave sections (112, 114) which alternate along a circumferential direction of said outer wall (20), such that when said rotor (10) turns, an air circulation is produced inside said housing by said convex sections (112) and an air circulation is produced along the outside portions of said concave sections (114) so as to allow efficient heat exchange through said outer wall (20).

10. A motorized wheel assembly as claimed in any one of claims 1 to 9, further comprising a measuring means for measuring the rotational speed and the position of said rotor (10) with respect to said stator (6), said measuring means comprising:

    • an optical fiber (80) having one end connected to a microprocessor unit (44) and a second end positioned so as to be adjacent to said rotor (10); and
    • a circular light reflector (82) mounted onto said rotor (10) in such a manner that when said rotor (10) turns, said reflector (82) passes in front of said second end of said fiber (80), said rotational speed and said position of said rotor (10) being calculated by means of said microprocessor unit (44).

11. A motorized wheel assembly as claimed in any one of claims 1 to 10, further comprising a first ball bearing (22) connected to said inner wall (18) and a second ball bearing (24) connected to said outer wall (20), said ball bearings (22, 24) being mounted respectively on each side of said shaft (2) so that the rotor (10) can turn with respect to said stator (6) by means of said ball bearings (22, 24).

12. A motorized wheel assembly as claimed in any one claims 1 to 11, further comprising a rim (28) fixed around an outer surface of said housing, an elastomer layer (30) being mounted between said rim (28) and said housing, said rim (28) being adapted to receive a tire (32).

13. A motorized wheel assembly as claimed in claim 12, wherein said rim (28) is flat.

14. A motorized wheel assembly as claimed in any one of claims 3 to 13, wherein said stator (6) is cylindrical and is provided with longitudinal parallel slots (200) for receiving said coils (8), said slots being inclined with respect to said longitudinal axis (3) so that each of said slots (200) has a lower end substantially aligned with an upper end of the adjacent slot so as to provide an even torque when said motorized wheel assembly is operating.

15. A motorized wheel assembly as claimed in any one of claims 1 to 14, wherein said support (13) comprises at least three equally spaced arms (13) extending radially as far as the peripheral ends of said support (13).

16. A motorized wheel assembly as claimed in claim 15, wherein said support (13) comprises four equally spaced arms (13).

17. A motorized wheel assembly as claimed in any one of claims 1 to 16, wherein said stator (6) comprises a lightweight heat-conductive material.

18. A motorized wheel assembly as claimed in claim 17, wherein said material is an aluminium alloy.

19. A motorized wheel assembly as claimed in any one of claims 12 to 18, wherein said air gap is positioned at a predetermined distance $R_1$ from said axis (3), said rim (28) having a surface for receiving said tire (32), said surface is positioned at a predetermined distance $R_2$ from said axis (3), and the ratio $R_1/R_2$ is substantially of the order of 0.65 to 0.91.

20. A motorized wheel assembly as claimed in claim 19, wherein said rotor is provided with a coil (9) and the ratio $R_1/R_2$ is substantially of the order of 0.65 to 0.80.

**21.** A motorized wheel assembly as claimed in any one of claims 1 to 20, wherein said first end of said shaft (2) comprises a connecting means for connecting said shaft (2) to one end of said articulated connecting rod (50), said end of said articulated connecting rod (50) being provided with said ball joint (100).

**22.** A motorized wheel assembly as claimed in any one of claims 1 to 21, wherein said housing sealingly encloses said shaft (2) and said stator (6).

**23.** A motorized wheel assembly as claimed in claim 22, wherein said housing further encloses a conversion means (12).

**Patentansprüche**

**1.** Rad mit integriertem Elektromotor, das umfaßt:

- eine Hohlachse (2), die eine Längsachse (3) sowie ein erstes und ein zweites Ende besitzt, wobei das erste Ende mit einer Öffnung versehen ist, die Leiter (4), die von außerhalb des Rades mit integriertem Elektromotor herangeführt sind, aufnehmen kann, wobei zwischen den beiden Enden oder am zweiten Ende eine zweite Öffnung vorgesehen ist;
- einen Stator (6), der zu der Achse (2) koaxial ist und an der Achse befestigt ist, wobei der Stator (6) einen an der Achse (2) befestigten Mittelabschnitt, einen vom Mittelabschnitt radial verlaufenden Träger (13) sowie ein umgebendes und kreisförmiges Polstück umfaßt, wobei das Polstück an den Umfangsenden des Trägers (13) befestigt ist;
- einen Rotor (10), der koaxial zum Stator (6) in der Weise angeordnet ist, daß er um den Stator (6) drehbar ist, wobei der Rotor (10) ein Gehäuse aufweist, das eine zylindrische Wand (17), eine auf einer Seite der zylindrischen Wand (17) angeordnete innere Wand (18) und eine auf der anderen Seite der zylindrischen Wand (17) angeordnete äußere Wand (20) besitzt, wobei die zylindrische Wand (17) eine innere Oberfläche aufweist, die mit einem den Stator (6) umgebenden magnetischen Mittel versehen ist, das von dem Stator (6) durch einen Luftspalt getrennt ist, wobei sich die Achse (2) durch einen Mittelabschnitt der inneren Wand (18) erstreckt;

  **dadurch gekennzeichnet, daß** die innere Wand (18) eine ringförmige Ausbauchung aufweist, der sich in den Innenraum der Breite der zylindrischen Wand (17) erstreckt, um einen in bezug auf das erste Ende der Achse (2) konzentrischen und kreisförmigen Raum (92) zu begrenzen, und daß die Hohlachse (2) eine Länge besitzt, die kleiner als die Breite der zylindrischen Wand (17) ist, so daß ein Kugelgelenk (100), das einem Achsschenkel (50) zugeordnet ist und mit der Achse (2) verbunden werden kann, wenigstens teilweise in dem konzentrischen kreisförmigen Raum (92) angeordnet ist.

**2.** Rad mit integriertem Elektromotor nach Anspruch 1, bei dem der Raum (92) vorgegebene Abmessungen besitzt, so daß wenigstens ein Teil eines Bremsmittels (94) innerhalb des Raums (92) angebracht sein kann.

**3.** Rad mit integriertem Elektromotor nach Anspruch 1 oder 2, bei dem das Umfangspolstück des Stators (6) Metallplättchen (27) aufweist, auf die Wicklungen (8) gewickelt sind.

**4.** Rad mit integriertem Elektromotor nach einem der Ansprüche 1 bis 3, bei dem der Träger (13) mit Öffnungen versehen ist, um sein Gewicht zu verringern.

**5.** Rad mit integriertem Elektromotor nach Anspruch 4, bei dem der Träger (13) zwischen den Öffnungen wenigstens zwei Arme (13) aufweist.

**6.** Rad mit integriertem Elektromotor nach einem der Ansprüche 1 bis 5, bei dem das Magnetmittel des Rotors (10) mit einer Reihe von Permanentmagneten (26) versehen ist.

**7.** Rad mit integriertem Elektromotor nach einem der Ansprüche 1 bis 5, bei dem das Magnetmittel des Rotors (10) ein Polstück umfaßt, das aus Metallplättchen hergestellt ist und auf das eine Wicklung (9) gewickelt ist, wobei der Stator (6) mit Bürsten (111) versehen ist, die mit einem Ausgang eines Umsetzungsmittels (12) verbunden sind, wobei der Rotor (10) außerdem mit leitenden Kontaktoberflächen versehen ist, die so angeordnet sind, daß sie mit den Bürsten (111) zusammenwirken, wobei die Kontaktoberflächen mit der Wicklung (9) des Rotors (10) verbunden sind.

**8.** Rad mit integriertem Elektromotor nach einem der Ansprüche 3 bis 5, bei dem das Magnetmittel des Rotors (10) ein aus Metallplättchen hergestelltes Polstück umfaßt, auf das eine Wicklung (9) gewickelt ist, so daß ein elektrischer Strom in die Wicklung (9) des Rotors (10) mittels eines elektromagnetischen Feldes eingeleitet werden kann, das durch einen in die Wicklungen des Stators (6) eingeleiteten elektrischen Strom erzeugt wird.

**9.** Rad mit integriertem Elektromotor nach einem der Ansprüche 1 bis 8, bei dem die äußere Wand (20) des Gehäuses konvexe und konkave Abschnitte (112, 114) umfaßt, die längs einer Umfangsrichtung der äußeren Wand (20) abwechselnd angeordnet sind, so daß dann, wenn sich der Rotor (10) dreht, durch die konvexen Abschnitte (112) innerhalb des Gehäuses eine Luftzirkulation erzeugt wird und durch die konkaven Abschnitte (114) längs der äußeren Teile eine Luftzirkulation erzeugt wird, so daß ein wirksamer Wärmeaustausch durch die äußere Wand (20) ermöglicht wird.

10. Rad mit integriertem Elektromotor nach einem der Ansprüche 1 bis 9, bei dem ein Meßmittel vorgesehen ist, das die Drehzahl und die Stellung des Rotors (10) in bezug auf den Stator (6) mißt, wobei das Meßmittel umfaßt:

- eine Lichtleitfaser (80) die ein erstes Ende, das zu einer Mikroprozessoreinheit (44) geführt ist, und ein zweites Ende, das in der Nähe des Rotors (10) angeordnet ist, aufweist; und
- einen kreisförmigen Lichtreflektor (82), der am Rotor (10) in der Weise angebracht ist, daß er sich, wenn sich der Rotor (10) dreht, vor dem zweiten Ende der Faser (80) vorbeibewegt, so daß die Drehzahl und die Stellung des Rotors (10) mittels der Mikroprozessoreinheit (44) berechnet werden können.

11. Rad mit integriertem Elektromotor nach einem der Ansprüche 1 bis 10, bei dem ein erstes Kugellager (22), das mit der inneren Wand (18) verbunden ist, und ein zweites Kugellager (24), das mit der äußeren Wand (20) verbunden ist, vorgesehen sind, wobei die Kugellager (22, 24) beiderseits der Achse (2) in der Weise angebracht sind, daß sich der Rotor (10) in bezug auf den Stator (6) mittels der Kugellager (22, 24) drehen kann.

12. Rad mit integriertem Elektromotor nach einem der Ansprüche 1 bis 11, bei dem um eine äußere Oberfläche des Gehäuses eine Radfelge (28) befestigt ist, wobei zwischen der Radfelge (28) und dem Gehäuse ein Elastomerband (30) angebracht ist und die Radfelge (28) einen Luftreifen (32) aufnehmen kann.

13. Rad mit integriertem Elektromotor nach Anspruch 12, bei dem die Radfelge (28) eine Scheibe ist.

14. Rad mit integriertem Elektromotor nach einem der Ansprüche 3 bis 13, bei dem der Stator (6) zylindrisch ist und mit longitudinalen und parallelen Schlitzen (200) versehen ist, die dazu dienen, die Wicklungen (8) aufzunehmen, wobei die Schlitze in bezug auf die Längsachse (3) geneigt sind, so daß jeder Schlitz (200) ein unteres Ende aufweist, das im wesentlichen auf ein oberes Ende des benachbarten Schlitzes ausgerichtet ist, so daß sich ein regelmäßiges Paar ergibt, wenn das Rad mit integriertem Elektromotor in Betrieb ist.

15. Rad mit integriertem Elektromotor nach einem der Ansprüche 1 bis 14, bei dem der Träger (13) wenigstens drei Arme (13) umfaßt, die gleichmäßig beabstandet sind und sich radial bis zu den Umfangsenden des Trägers (13) erstrekken.

16. Rad mit integriertem Elektromotor nach Anspruch 15, bei dem der Träger (13) vier gleichmäßig beabstandete Arme (13) umfaßt.

17. Rad mit integriertem Elektromotor nach einem der Ansprüche 1 bis 16, bei dem der Stator (6) einen leichten Werkstoff aufweist, der Wärme leiten kann.

18. Rad mit integriertem Elektromotor nach Anspruch 17, bei dem der Werkstoff eine Aluminiumlegierung ist.

19. Rad mit integriertem Elektromotor nach einem der Ansprüche 12 bis 18, bei dem der Luftspalt in einem vorgegebenen Abstand $R_1$ von der Achse (3) angeordnet ist, wobei die Radfelge (28) eine Oberfläche besitzt, die den Luftreifen (32) aufnehmen kann und in einem vorgegebenen Abstand $R_2$ von der Achse (3) angeordnet ist, wobei das Verhältnis $R_1/R_2$ im wesentlichen im Bereich von 0,65 bis 0,91 liegt.

20. Rad mit integriertem Elektromotor nach Anspruch 19, bei dem der Rotor mit einer Wicklung (9) versehen ist und das Verhältnis $R_1/R_2$ im Bereich von 0,65 bis 0,80 liegt.

21. Rad mit integriertem Elektromotor nach einem der Ansprüche 1 bis 20, bei dem das erste Ende der Achse (2) ein Verzweigungsmittel umfaßt, um die Achse (2) mit einem Ende des angelenkten Achsschenkels (50) zu verbinden, wobei das Ende des Achsschenkels (50) mit dem Kugelgelenk (100) versehen ist.

22. Rad mit integriertem Elektromotor nach einem der Ansprüche 1 bis 21, bei dem das Gehäuse die Achse (2) und den Stator (6) dicht umschließt.

23. Rad mit integriertem Elektromotor nach Anspruch 22, bei dem das Gehäuse außerdem ein Umsetzungsmittel (12) umschließt.

FIG. 1

FIG. 2

FIG. 4

FIG. 3

FIG. 6

FIG. 5

FIG. 9

FIG. 8

FIG. 7

FIG. 10

FIG. 11

EP 0 744 313 B1

66
72
67
67
68
68
65
65
67
67

FIG. 13

66
72
68

FIG. 12

FIG. 14

FIG. 15

FIG. 16

FIG. 17

FIG. 18

FIG. 19

FIG. 20

FIG. 21

EP 0 744 313 B1

26

FIG. 22

FIG. 23

FIG. 24

FIG. 25